(19) Europäisches Patentamt
European Patent Office
Office européen des brevets

(11) **EP 3 838 940 A1**

(12) **EUROPEAN PATENT APPLICATION**

(43) Date of publication:
**23.06.2021 Bulletin 2021/25**

(51) Int Cl.:
*C08G 18/08* (2006.01)     *C08G 18/10* (2006.01)
*C08G 18/32* (2006.01)     *C08G 18/73* (2006.01)

(21) Application number: **19216829.2**

(22) Date of filing: **17.12.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Covestro Deutschland AG**
**51373 Leverkusen (DE)**

(72) Inventor: **The designation of the inventor has not yet been filed**

(74) Representative: **Levpat**
**c/o Covestro AG**
**Gebäude 4825**
**51365 Leverkusen (DE)**

(54) **POLYURETHANES HAVING AN INCREASE IN MOLECULAR WEIGHT WHEN HEATED**

(57)     The invention relates to a thermoplastic polyurethane that is the reaction product of one or more diols with one or more aliphatic, cycloaliphatic and/or araliphatic diisocyanates, where the reaction product has a urethane group weight content of greater than 42 % and its weight average molecular weight increases when heated. Methods for its use are also disclosed herein where the reaction product is heated inside a extruder, and the weight average molecular weight increases therein.

EP 3 838 940 A1

**Description**

The invention relates to a thermoplastic polyurethane by reaction of one or more diols with one or more diisocyanates comprising aliphatic, cycloaliphatic and/or araliphatic diisocyanates, where the isocyanate component and the diol component are selected such that, the resulting polyurethane has a urethane group weight content of more than 42 %, and the molecular weight increases when heated, a method for its production and a method for its injection into a mould.

GB1331098A discloses a coating powder comprising a polyurethane obtained from a polyisocyanate containing aliphatic bound isocyanate groups and a polyol with aliphatically bound hydroxyl groups. It teaches adding additives with a polyurethane having a softening point of 150 °C, wherein the mixture is fused in a heatable twin-shaft kneading screw at 160 °C.

GB1386892A discloses a process for the production of a polyurethane from at least one linear dihydroxy compound and at least one diisocyanate in the presence of a solvent, wherein the obtained product is cooled before thermal degradation sets in. Afterward, the product is stabilized by thermal after treatment at temperatures of from 60 to 100 °C until no more free isocyanate can be detected.

GB 1492242A discloses a method of producing a polyurethane product comprising curing a mixture of an isocyanate terminated polyurethane prepolymer and at least one curative. The polyurethane product is heat treated at a temperature of from 60 to 180 °C of from 1 to 30000 minutes.

DE4133306A1 discloses a method for the production of low-fogging polyurethanes, wherein the obtained foams are tempered at elevated temperatures, from 40 to 180 °C for a time span of from 0.2 to 15 minutes.

US6020390 discloses a process for preparing a flexible polyurethane foam, wherein the process comprises the heat treatment of a polyurethane foam to a temperature between 70 °C and 200 °C for a period of time between 0.5 minutes and 8 hours.

US20060045996A1 discloses a thermoplastic polyurethane resin which is suitable for slush moulding, wherein the resin has a soft segment and from 5 to 50 wt.% of a hard segment, wherein the soft segment is obtained from a high molecular weight diol and the hard segment is obtained from a diisocyanate having symmetrical structure, a low molecular weight diamine and/or a low molecular weight diol. A slush moulding process comprises heating of a mould to 200 to 300 °C, introduction of a material for moulding into a cavity, rotation for 5 to 45 seconds, removing excess material and maintaining the material for 70 to 120 seconds to complete the melt of the material for moulding.

US20120059141A1 discloses a process for preparing a thermoplastic polyisocyanate polyaddition product based on polyisocyanate (i) and compounds which are reactive toward polyisocyanate, with or without the use of chain extenders, a first catalyst (iv) and/or auxiliaries and/or additives (v), wherein a second catalyst is initially vaporized and then applied to the polyisocyanate polyaddition product by condensation, and to the products prepared therefrom.

Low and high molecular weight compounds are well known in the prior art. While high molecular weight compounds have several properties that are advantageous, including higher strength properties, such compounds are often difficult to work with, including flowability of a such a compound into a mould. Low molecular weight compounds often have good flowability properties, but lack in strength properties. It was therefore an object of the present invention to provide a thermoplastic polyurethane whose molecular weight is low during initial processing, but whose molecular weight increases when being heated before applied into a mould, as well as methods for its preparation and application.

This object is achieved by a thermoplastic polyurethane comprising the reaction product of the following components:

A) one or more diols,
B) one or more diisocyanates, preferably one or more aliphatic, cycloaliphatic, araliphatic diisocyanates and/or mixtures of at least 2 of these,
C) optionally one or more catalysts, and
D) optionally further auxiliaries or additives,

wherein the thermoplastic polyurethane has a urethane group weight content of more than 42 wt.% based on the combined weight of the one or more diols and the one or more diisocyanates, and wherein the weight average molecular weight ($\overline{M}_w$) of the thermoplastic polyurethane increases when heated.

In another embodiment, this object is achieved by a method for injecting a thermoplastic polyurethane into a mould, the method comprising:

- heating an extruder connected to the mould,
- feeding the extruder with a thermoplastic polyurethane comprising the reaction product of components:

A) one or more diols,

B) one or more diisocyanates, preferably one or more aliphatic, cycloaliphatic, araliphatic diisocyanates and/or mixtures of at least 2 of these,
C) optionally one or more catalysts, and
D) optionally further additives,

- heating the thermoplastic polyurethane in the extruder,
- injecting the heated thermoplastic polyurethane into the mould,

wherein the thermoplastic polyurethane has a urethane group weight content of more than 42 wt.% based on the combined weight of the one or more diols and the one or more diisocyanates, and wherein the weight average molecular weight ($\overline{M}_w$) of the thermoplastic polyurethane increases after being heated in the extruder.

The thermoplastic polyurethane can be heated with or without a solvent. Preferably the thermoplastic polyurethane is heated without a solvent. In case that a solvent is used, the solvent is preferably inert toward isocyanate groups.

The urethane group weight content can be calculated as described below in the experimental section. The urethane group weight content as used herein refers to the theoretical urethane group weight content, i. e. the calculation is based on the assumption that all diols react with all diisocyanates in the reaction mixture by forming only urethane groups.

One or more diols are used as component A, preferably one or more aliphatic or cycloaliphatic diols, preferably selected from the group consisting of ethane-1,2-diol, propane-1,2-diol, propane-1,3-diol, butane-1,2-diol, butane-1,3-diol, butane-1,4-diol, pentane-1,5-diol, hexane-1,6-diol, heptane-1,7-diol, octane-1,8-diol, nonane-1,9-diol, cyclobutane-1,3-diol, cyclopentane-1,3-diol, cyclohexane-1,2-, -1,3- and -1,4-diol, cyclohexane-1,4-dimethanol, and/or mixtures of at least 2 of these. Preference is given to using aliphatic or cycloaliphatic diols selected from the group consisting of ethane-1,2-diol, propane-1,2-diol, propane-1,3-diol, butane-1,2-diol, butane-1,3-diol, butane-1,4-diol, pentane-1,5-diol, hexane-1,6-diol, heptane-1,7-diol, octane-1,8-diol, nonane-1,9-diol, cyclobutane-1,3-diol, cyclopentane-1,3-diol, cyclohexane-1,2-, -1,3- and -1,4-diol, cyclohexane-1,4-dimethanol, and/or mixtures of at least 2 of these. Preference is given to using, as component A, aliphatic diols selected from the group consisting of ethane-1,2-diol, propane-1,2-diol, propane-1,3-diol, butane-1,2-diol, butane-1,3-diol, butane-1,4-diol, pentane-1,5-diol, hexane-1,6-diol, heptane-1,7-diol, octane-1,8-diol and/or mixtures of at least 2 of these, preferably ethane-1,2-diol, propane-1,2-diol, propane-1,3-diol, butane-1,2-diol, butane-1,3-diol, butane-1,4-diol, pentane-1,5-diol, hexane-1,6-diol, heptane-1,7-diol and/or mixtures of at least 2 of these, more preferably butane-1,2-diol, butane-1,3-diol, butane-1,4-diol, pentane-1,5-diol, hexane-1,6-diol and/or mixtures of at least 2 of these, more preferably ethane-1,2-diol, propane-1,2-diol, propane-1,3-diol, butane-1,2-diol, butane-1,3-diol, butane-1,4-diol, pentane-1,5-diol, hexane-1,6-diol and/or mixtures of at least 2 of these, even more preferably ethane-1,2-diol, propane-1,2-diol, propane-1,3-diol, butane-1,2-diol, butane-1,3-diol, butane-1,4-diol, pentane-1,5-diol and/or mixtures of at least 2 of these, and even more preferably propane-1,2-diol, propane-1,3-diol, butane-1,2-diol, butane-1,3-diol, butane-1,4-diol, especially butane-1,4-diol and/or mixtures of at least 2 of these. The diols and / or their precursors can be accessible from fossil or biological sources.

Suitable components B are all aliphatic, cycloaliphatic, aromatic or araliphatic diisocyanates, especially monomeric diisocyanates, that are known to those skilled in the art. Preferably components B are all aliphatic, cycloaliphatic or araliphatic diisocyanates, especially monomeric aliphatic, monomeric cycloaliphatic or monomeric araliphatic diisocyanates, that are known to those skilled in the art. If component B is mentioned in the context of the present invention, this may also be a mixture of at least two components B or a mixture of component(s) B and nonreactive terminated prepolymers. It is preferably one component B or a mixture of at least two components B. The diisocyanates and / or their precursors can be accessible from fossil or biological sources. In particular it is preferred, that 1,6-diisocyanatohexane (HDI) is produced/synthesized from, wherein the 1,6-diaminohexan is from a biological source or isolated form a biological source or made by an biotechnological process.

Examples of suitable aliphatic diisocyanates are 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane and 1,10-diisocyanatodecane.

Examples of suitable cycloaliphatic diisocyanates are 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI), 1-isocyanato-1-methyl-4(3)-isocyanatomethylcyclohexane, 2,4'- and 4,4'-diisocyanatodicyclohexylmethane (H12MDI), 1,3- and 1,4-bis(isocyanatomethyl)cyclohexane, bis(isocyanatomethyl)norbornane (NBDI), 4,4'-diisocyanato-3,3'-dimethyldicyclohexylmethane, 4,4'-diisocyanato-3,3',5,5'-tetramethyldicyclohexylmethane, 4,4'-diisocyanato-1,1'-bi(cyclohexyl), 4,4'-diisocyanato-3,3'-dimethyl-1,1'-bi(cyclohexyl), 4,4'-diisocyanato-2,2',5,5'-tetramethyl-1,1'-bi(cyclohexyl), 1,8-diisocyanato-p-menthane, 1,3-diisocyanatoadamantane and 1,3-dimethyl-5,7-diisocyanatoadamantane.

Examples of suitable aromatic diisocyanates are 2,4- and 2,6-diisocyanatotoluene (TDI), 2,4'- and 4,4'-diisocyanatodiphenylmethane (MDI) and 1,5-diisocyanatonaphthalene.

Examples of suitable araliphatic diisocyanates are 1,3- and 1,4-bis(isocyanatomethyl)benzene (xylylene diisocyanate; XDI), 1,3- and 1,4-bis(1-isocyanato-1-methylethyl)benzene (TMXDI).

Further diisocyanates that are likewise suitable can additionally be found, for example, in HOUBEN-WEYL "Methoden der organischen Chemie" [Methods of Organic Chemistry], volume E20 "Makromolekulare Stoffe" [Macromolecular Materials], Georg Thieme Verlag, Stuttgart, New York 1987, p. 1587-1593 or in Justus Liebigs Annalen der Chemie volume 562 (1949) p. 75-136.

Preference is given to using aliphatic and cycloaliphatic diisocyanates having a molecular weight between $\geq$ 140 to $\leq$ 400 g/mol, especially aliphatic and cycloaliphatic diisocyanates selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI) and/or mixtures of at least 2 of these. In another preferred embodiment, diisocyanates selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 1,8-diisocyanatooctane, 1,10-diisocyanatodecane, 1,3- and 1,4-diisocyanatocyclohexane, 1,3-diisocyanato-2-methylcyclohexane, 1-isocyanato-3,3,5-trimethyl-5-isocyanatomethylcyclohexane (isophorone diisocyanate; IPDI) and/or mixtures of at least 2 of these, even more preferably 1,4-diisocyanatobutane (BDI), 1,5-diisocyanatopentane (PDI), 1,6-diisocyanatohexane (HDI), 2-methyl-1,5-diisocyanatopentane and/or mixtures of at least 2 of these and even more preferably 1,4-diisocyanatobutane (BDI), 1,5-diisocyanatopentane (PDI), 1,6-diisocyanatohexane (HDI) and/or mixtures of at least 2 of these, are used.

In this connection, polyisocyanates are understood to mean organic compounds having more than two isocyanate groups, no matter whether these have been obtained by means of phosgenation or by phosgene-free methods. Examples of suitable polyisocyanates are triphenylmethane 4,4',4"-triisocyanate or 4-isocyanatomethyloctane 1,8-diisocyanate (TIN). In particular, it is also possible to use derivatives of the aliphatic, cycloaliphatic and/or araliphatic diisocyanates mentioned below. Examples of these are the commercially available trimers (biurets, allophanates or isocyanurates) of 1,4-diisocyanatobutane (BDI), 1,5-diisocyanatopentane (PDI), 1,6-diisocyanatohexane (HDI), 1-isocyanato-3,3,5-trimethyl-5-isocyanatomethylcyclohexane or 2,4'- and 4,4'-diisocyanato-dicyclohexylmethane. These polyisocyanates can be added up to an amount at which the thermoplastic properties of the end product are conserved.

In a preferred embodiment, component B does not contain any aromatic diisocyanates, polyisocyanates and/or derivatives thereof.

For preparation of the thermoplastic polyurethanes according to the invention, components A and B can be converted optionally in the presence of one or more catalysts, auxiliaries and/or additives. In a preferred embodiment the compounds A, B and optionally C and D can be converted in a first step to at least one prepolymer, preferably to at least one Hydroxy-terminated prepolymer and the prepolymer obtained in the first step can be converted in at least one further step with a chain extender, preferably a diisocyanate, to the thermoplastic polyurethane.

Suitable catalysts according to the invention are the customary tertiary amines known from the prior art, for example triethylamine, dimethylcyclohexylamine, N-methylmorpholine, N,N'-dimethylpiperazine, 2-(dimethylaminoethoxy)ethanol, diazabicyclo[2.2.2]octane and the like, and also in particular organic metal compounds such as titanic esters, iron compounds, tin compounds, e.g. tin diacetate, tin dioctoate, tin dilaurate or the dialkyltin salts of aliphatic carboxylic acids such as dibutyltin diacetate, dibutyltin dilaurate or the like. The catalysts are preferably selected from the group consisting of tertiary amines and organic metal compounds, more preferably the catalysts are selected from the group consisting of triethylamine, dimethylcyclohexylamine, N-methylmorpholine, N,N'-dimethylpiperazine, 2-(dimethylaminoethoxy)ethanol, diazabicyclo[2,2,2]octane, titanic esters, iron compounds, and/or tin compounds, wherein the tin compound are preferably selected from the group consisting of tin diacetate, tin dioctoate, tin dilaurate, dibutyltin diacetate, dibutyltin dilaurate and/or mixture of at least 2 of these. In another preferred embodiment the catalysts are organic metal compounds, in particular titanic esters, iron compounds and/or tin compounds.

The one or more catalysts are used in amounts of 0.001 % to 2.0 % by weight, preferably of 0.005 % to 1.0 % by weight, more preferably of 0.01 % to 0.1 % by weight, based on the diisocyanate component B. The one or more catalysts can be used in neat form or dissolved in the diol component A. One advantage here is that the thermoplastic polyurethanes that are then obtained do not contain any impurities as a result of any catalyst solvents additionally used. The one or more catalysts can be added in one or more portions or else continuously, for example with the aid of a suitable metering pump, over the entire duration of the reaction.

Alternatively, it is also possible to use mixtures of the catalyst(s) with a catalyst solvent, preferably with an organic catalyst solvent. The dilution level of the catalyst solutions can be chosen freely within a very wide range. Catalytically active solutions are those of a concentration over and above 0.001 % by weight.

Suitable catalyst solvents are, for example, solvents that are inert toward isocyanate groups, for example hexane, toluene, xylene, chlorobenzene, ethyl acetate, butyl acetate, diethylene glycol dimethyl ether, dipropylene glycol dimethyl ether, ethylene glycol monomethyl or monoethyl ether acetate, diethylene glycol ethyl and butyl ether acetate, propylene glycol monomethyl ether acetate, 1-methoxyprop-2-yl acetate, 3-methoxy-n-butyl acetate, propylene glycol diacetate, acetone, methyl ethyl ketone, methyl isobutyl ketone, cyclohexanone, lactones such as β-propiolactone, γ-butyrolactone, ε-caprolactone and ε-methylcaprolactone, but also solvents such as N-methylpyrrolidone and N-methylcaprolactam, 1,2-propylene carbonate, methylene chloride, dimethyl sulfoxide, triethyl phosphate or any desired mixtures of such solvents.

Alternatively, it is possible to use catalyst solvents that bear groups reactive toward isocyanates and can be incorporated into the diisocyanate. Examples of such solvents are mono- and polyhydric simple alcohols, for example methanol, ethanol, n-propanol, isopropanol, n-butanol, n-hexanol, 2-ethyl-1-hexanol, ethylene glycol, propylene glycol, the isomeric butanediols, 2-ethylhexane-1,3-diol or glycerol; ether alcohols, for example 1-methoxy-2-propanol, 3-ethyl-3-hydroxymethyloxetane, tetrahydrofurfuryl alcohol, ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol, dipropylene glycol or else liquid higher molecular weight polyethylene glycols, polypropylene glycols, mixed polyethylene/polypropylene glycols and the monoalkyl ethers thereof; ester alcohols, for example ethylene glycol monoacetate, propylene glycol monolaurate, glycerol mono- and diacetate, glycerol monobutyrate or 2,2,4-trimethylpentane-1,3-diol monoisobutyrate; unsaturated alcohols, for example allyl alcohol, 1,1-dimethyl allyl alcohol or oleyl alcohol; araliphatic alcohols, for example benzyl alcohol; N-monosubstituted amides, for example N-methylformamide, N-methylacetamide, cyanoacetamide or 2-pyrrolidone, or any desired mixtures of such solvents.

As well as components A and B and the one or more catalysts, it is also possible to use auxiliaries and/or additives. These may be standard additives in the field of thermoplastic technology, such as dyes, fillers, processing auxiliaries, plasticizers, nucleating agents, stabilizers, flame retardants, demoulding agents or reinforcing additives. Further details of the auxiliaries and additives mentioned can be found in the specialist literature, for example the monograph by J. H. Saunders and K. C. Frisch: "High Polymers", volume XVI, Polyurethane, parts 1 and 2, Interscience Publishers 1962 and 1964, Taschenbuch für Kunststoff-Additive [Handbook of Plastics Additives] by R. Gächter and H. Müller (Hanser Verlag Munich 1990), or DE-A 29 01 774. It will be appreciated that it may likewise be advantageous to use multiple additives of multiple types.

In another preferred embodiment, additives used in small amounts may also be customary mono-, di-, tri- or polyfunctional compounds reactive toward isocyanates in proportions of 0.001 mol% up to 2 mol%, preferably of 0.002 mol% to 1 mol%, based on the total molar amount of component A, for example as chain terminators, auxiliaries or demoulding aids. Examples include alcohols such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol and stearyl alcohol. Examples of suitable triols are trimethylolethane, trimethylolpropane or glycerol. Suitable higher-functionality alcohols are ditrimethylolpropane, pentaerythritol, dipentaerythritol or sorbitol. Amines such as butylamine and stearylamine or thiols.

In a preferred embodiment the thermoplastic polyurethane is formed by polyaddition of at least one combination of component A and B selected from the group consisting of 1,4-diisocyanatobutane with ethane-1,2-diol, 1,4-diisocyanatobutane with propane-1,2- and/or -1,3-diol, 1,4-diisocyanatobutane with butane-1,2-, -1,3- and/or -1,4-diol, 1,4-diisocyanatobutane with pentane-1,5-diol, 1,4-diisocyanatobutane with hexane-1,6-diol, 1,4-diisocyanatobutane with heptane-1,7-diol, 1,4-diisocyanatobutane with octane-1,8-diol, 1,4-diisocyanatobutane with nonane-1,9-diol, 1,4-diisocyanatobutane with decane-1,10-diol, 1,4-diisocyanatobutane with cyclobutane-1,3-diol, 1,4-diisocyanatobutane with cyclopentane-1,3-diol, 1,4-diisocyanatobutane with cyclohexane-1,2-, -1,3- and -1,4-diol and/or mixtures of at least 2 isomers, 1,4-diisocyanatobutane with cyclohexane-1,4-dimethanol, 1,5-diisocyanatopentane with ethane-1,2-diol, 1,5-diisocyanatopentane with propane-1,2- and/or -1,3-diol, 1,5-diisocyanatopentane with butane-1,2-, -1,3- and/or -1,4-diol, 1,5-diisocyanatopentane with pentane-1,5-diol, 1,5-diisocyanatopentane with hexane-1,6-diol, 1,5-diisocyanatopentane with heptane-1,7-diol, 1,5-diisocyanatopentane with octane-1,8-diol, 1,5-diisocyanatopentane with cyclobutane-1,3-diol, 1,5-diisocyanatopentane with cyclopentane-1,3-diol, 1,5-diisocyanatopentane with cyclohexane-1,2-, -1,3- and -1,4-diol and/or mixtures of at least 2 isomers, 1,5-diisocyanatopentane with cyclohexane-1,4-dimethanol, 1,6-diisocyanatohexane with ethane-1,2-diol, 1,6-diisocyanatohexane with propane-1,2- and/or -1,3-diol, 1,6-diisocyanatohexane with butane-1,2-, -1,3- and/or -1,4-diol, 1,6-diisocyanatohexane with pentane-1,5-diol, 1,6-diisocyanatohexane with hexane-1,6-diol, 1,6-diisocyanatohexane with heptane-1,7-diol, 1-isocyanato-3,3,5-trimethyl-5-isocyanatomethylcyclohexane with ethane-1,2-diol and 1-isocyanato-3,3,5-trimethyl-5-isocyanatomethylcyclohexane with propane-1,2- and/or -1,3-diol. In a preferred embodiment the thermoplastic polyurethane is formed by polyaddition of at least one combination of component A and component B selected from the group consisting of 1,4-diisocyanatobutane with ethane-1,2-diol, 1,4-diisocyanatobutane with propane-1,2- and/or -1,3-diol, 1,4-diisocyanatobutane with butane-1,2-, -1,3- and/or -1,4-diol, 1,4-diisocyanatobutane with pentane-1,5-diol, 1,4-diisocyanatobutane with hexane-1,6-diol, 1,4-diisocyanatobutane with heptane-1,7-diol, 1,4-diisocyanatobutane with octane-1,8-diol, 1,4-diisocyanatobutane with cyclobutane-1,3-diol, 1,4-diisocyanatobutane with cyclopentane-1,3-diol, 1,4-diisocyanatobutane with cyclohexane-1,2-, -1,3- and -1,4-diol and/or mixtures of at least 2 isomers, 1,4-diisocyanatobutane with cyclohexane-1,4-dimethanol, 1,5-diisocyanatopentane with ethane-1,2-diol, 1,5-diisocyanatopentane with propane-1,2- and/or -1,3-diol, 1,5-diisocyanatopentane with butane-1,2-, -1,3- and/or -1,4-diol, 1,5-diisocyanatopentane with pentane-1,5-diol, 1,5-diisocyanatopentane with hexane-1,6-diol, 1,5-diisocyanatopentane with heptane-1,7-diol, 1,6-diisocyanatohexane with ethane-1,2-diol, 1,6-diisocyanatohexane with propane-1,2- and/or -1,3-diol, 1,6-diisocyanatohexane with butane-1,2-, -1,3- and/or -1,4-diol, 1,6-diisocyanatohexane with pentane-1,5-diol and 1,6-diisocyanatohexane with hexane-1,6-diol, even more preferably selected from the group consisting of 1,4-diisocyanatobutane with ethane-1,2-diol, 1,4-diisocyanatobutane with propane-1,2- and/or -1,3-diol, 1,4-diisocyanatobutane with butane-1,2-, -1,3- and/or -1,4-diol, 1,4-diisocyanatobutane with pentane-1,5-diol, 1,4-diisocyanatobutane with hexane-1,6-diol, 1,5-diisocyanatopentane with ethane-1,2-diol, 1,5-diisocyanatopentane with propane-1,2- and/or -1,3-diol, 1,5-diisocyanatopentane with butane-1,2-, -1,3- and/or -1,4-diol, 1,5-diisocyanatopentane with pentane-1,5-diol, 1,5-diisocyanatopentane with hexane-1,6-diol, 1,6-diisocyanatohexane with ethane-1,2-diol, 1,6-diisocyanatohexane with propane-1,2- and/or -1,3-diol, 1,6-diisocyanatohexane with butane-1,2-, -1,3- and/or -1,4-diol and 1,6-diisocyanatohexane with pentane-1,5-diol, even more preferably selected from the group consisting of 1,4-diisocyanatobutane with ethane-1,2-diol, 1,4-diisocyanatobutane with propane-1,2- and/or -1,3-diol, 1,4-diisocyanatobutane with butane-1,2-, -1,3- and/or -1,4-diol, 1,4-diisocyanatobutane with pentane-1,5-diol, 1,4-diisocyanatobutane with hexane-1,6-diol, 1,5-diisocyanatopentane with ethane-1,2-diol, 1,5-diisocyanatopentane with propane-1,2- and/or -1,3-diol, 1,5-diisocyanatopentane with butane-1,2-, -1,3- and/or -1,4-diol, 1,5-diisocyanatopentane with pentane-1,5-diol, 1,6-diisocyanatohexane with ethane-1,2-diol, 1,6-diisocyanatohexane with propane-1,2-and/or -1,3-diol and 1,6-diisocyanatohexane with butane-1,2-, -1,3- and/or -1,4-diol. In a further preferred embodiment of the process according to the invention, the at least one hydroxy-terminated prepolymer is formed by polyaddition of at least one combination of component A and component B selected from the group consisting of 1,4-diisocyanatobutane with ethane-1,2-diol, 1,4-diisocyanatobutane with propane-1,2- and/or -1,3-diol, 1,4-diisocyanatobutane with butane-1,2-, -1,3- and/or -1,4-diol, 1,4-diisocyanatobutane with pentane-1,5-diol, 1,4-diisocyanatobutane with hexane-1,6-diol, 1,5-diisocyanatopentane with ethane-1,2-diol, 1,5-diisocyanatopentane with propane-1,2- and/or -1,3-diol, 1,5-diisocyanatopentane with butane-1,2-, -1,3- and/or -1,4-diol, 1,6-diisocyanatohexane with ethane-1,2-diol, 1,6-diisocyanatohexane with propane-1,2- and/or -1,3-diol and 1,6-diisocyanatohexane with butane-1,2-, -1,3- and/or -1,4-diol.

In a preferred embodiment, the thermoplastic polyurethane polymer has a proportion of component B of 30 % to 80 % by weight, preferably of 40 % to 75 % by weight, more preferably of 50 % to 70 % by weight, most preferably of 55 % to 70 % by weight, based on the total weight of the thermoplastic polyurethane.

In a preferred embodiment, the thermoplastic polyurethane polymer has a proportion of urethane groups of 4.0 to 10.0 mol/kg of polymer, preferably of 6.0 to 9.0 mol/kg of polymer, more preferably of 6.5 to 9.0 mol/kg of polymer, most preferably of 7.0 to 9.0 mol/kg of polymer. The proportion of urethane groups is determined by calculation from the molecular weight of the repeat unit. The urethane group weight content is between 42 wt.% and 70 wt.%, preferably between 45 wt.% and 58 wt.%, based on the combined weight of the one or more diols and the one or more diisocyanates.

In a further preferred embodiment, the thermoplastic polyurethane polymer according to the invention is obtained by reaction of a diisocyanate component with 98 % by weight to 100 % by weight of aliphatic diisocyanates and at least one aliphatic and/or cycloaliphatic diol having a molecular weight of 62 g/mol to 250 g/mol. Preferably, the diisocyanate component contains solely aliphatic diisocyanates.

In a further preferred embodiment, the thermoplastic polyurethane polymer according to the invention is prepared by reaction of a diisocyanate component B containing 98 % by weight to 100 % by weight of linear aliphatic diisocyanates and a diol component A containing 98 % by weight to 100 % by weight of linear aliphatic diols having a molecular weight of 62 g/mol to 250 g/mol. Particular preference is given to a polyurethane polymer prepared from a component B containing 98 % by weight to 100 % by weight of a diisocyanate, based on the total amount of component B, selected from the group consisting of hexamethylene 1,6-diisocyanate, pentamethylene 1,5-diisocyanate, butane 1,4-diisocyanate and/or a mixture of at least 2 of these, and a component A containing 98 % by weight to 100 % by weight of a diol, based on the total amount of component A, selected from the group consisting of butane-1,4-diol, hexane-1,6-diol, pentane-1,5-diol, propane-1,3-diol, ethane-1,2-diol and/or a mixture of at least 2 of these. Very particular preference is given to a polyurethane polymer prepared from a component B containing 98 % by weight to 100 % by weight of a diisocyanate, based on the total amount of component B, selected from the group consisting of hexamethylene 1,6-diisocyanate, pentamethylene 1,5-diisocyanate, butane 1,4-diisocyanate and/or a mixture of at least 2 of these, and a component A containing 98 % by weight to 100 % by weight of a diol, based on the total amount of component A, selected from the group consisting of butane-1,4-diol, hexane-1,6-diol, pentane-1,5-diol, propane-1,3-diol, ethane-1,2-diol and/or a mixture of at least 2 of these.

In a very particularly preferred embodiment, the thermoplastic polyurethane polymer is prepared by reaction of a diisocyanate component B containing 98 % to 100 % by weight of linear aliphatic diisocyanates, based on the total amount of component B, and a diol component A containing 98 % to 100 % by weight of linear aliphatic diols having a molecular weight of 62 g/mol to 250 g/mol, based on the total amount of component A. Particular preference is given to a polyurethane polymer that has been obtained from a component B containing 98 % by weight to 100 % by weight of hexamethylene 1,6-diisocyanate, based on the total amount of component B, and a component A containing 98 % by weight to 100 % by weight of butane-1,4-diol, based on the total amount of component A.

The thermoplastic polyurethanes may comprise further additives, such as dyes, fillers, processing auxiliaries, plasticizers, nucleating agents, stabilizers, flame retardants, demoulding agents, reinforcing additives, chain extenders or demoulding aids, or mono-, di-, tri- or polyfunctional compounds reactive toward isocyanates, such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, stearyl alcohol, triols such as trimethylolethane, trimethylolpropane or glycerol, higher-functionality alcohols such as ditrimethylolpropane, pentaerythritol, dipentaerythritol or sorbitol, or amines such as butylamine, stearylamine or thiols.

The thermoplastic polyurethanes preferably have a weight average molecular weight ($\overline{M}_w$) greater than 50000 g/mol, preferably between 50000 g/mol and 150000 g/mol, as measured by size exclusion chromatography (SEC) in hexafluoroisopropanol with polymethylmethacrylate as standard. The molecular weight increases, preferably from 1000 g/mol to 25000 g/mol, more preferably 1200 g/mol to 25000 g/mol, even more preferably 4000 g/mol to 25000 g/mol as measured by size exclusion chromatography (SEC) in hexafluoroisopropanol with polymethylmethacrylate as standard, when the thermoplastic polyurethane is heated, preferably to between 185 and 260 °C, or to between 190 and 250 °C, and most preferably to between 190 and 240 °C. The thermoplastic polyurethanes are preferably heated in an extruder. The increase of the weight average molecular weight ($\overline{M}_w$) after heating is between 1 % and 45 %, preferably between 1 % and 40 %, more preferably between 1 % and 30 %, even more preferably between 3 % and 30 % based on the weight average molecular weight of the non-heated polyurethane. In an embodiment, the molecular weight of the thermoplastic polyurethane increases when heated for a period of 50 to 60 seconds, and in another embodiment the molecular weight of the thermoplastic polyurethane subsequently decreases after being heated for a period of 100 to 120 seconds.

The invention includes methods for producing a thermoplastic polyurethane, the method comprising:

- feeding the reaction product of components:

  A) one or more diols,
  B) one or more diisocyanates, preferably one or more aliphatic, cycloaliphatic, araliphatic diisocyanates and/or mixtures of at least 2 of these,
  C) optionally one or more catalysts, and
  D) optionally further additives,

  wherein the thermoplastic polyurethane has a urethane group weight content of more than 42 wt.% based on the combined weight of the one or more diols and the one or more diisocyanates, into a heating device, preferably an extruder,

- heating, preferably to between 185 and 260 °C, the thermoplastic polyurethane, preferably for a period of 50 to 60 seconds, and
- cooling the heated thermoplastic polyurethane below the melting temperature of the thermoplastic polyurethane,

wherein the weight average molecular weight ($\overline{M}_w$) of the thermoplastic polyurethane increases after being heated in the extruder.

The invention also includes methods for injecting the thermoplastic polyurethane into a mould, the method comprising heating the thermoplastic polyurethane described herein, and injecting the heated thermoplastic polyurethanes into a mould. In an embodiment, the polyurethane is heated in an extruder connected to the mould. Preferably, the thermoplastic polyurethane is heated at an elevated temperature, preferably from about 195 °C to about 210 °C, for about 50 to 60 seconds in the extruder prior to the injection into the mould. In an embodiment, the mould is heated at an elevated temperature, preferably from about 30 °C to about 150 °C, more preferably from 40 °C to 130 °C , most preferred from 40 °C to 80 °C, for about 50 to 60 seconds following the injection of thermoplastic polyurethane.

The thermoplastic polyurethanes produced by the process according to the invention can be processed to give shaped bodies, especially extruded articles, injection-moulded articles, films, thermoplastic foams, or powders.

The invention also includes a moulded article, a film and / or a fibre comprising at least one thermoplastic polyurethane according to the invention, or produced by a method according to the invention.

The invention also includes the use of the thermoplastic polyurethane according to the invention, or produced by a method according to the invention, for the production of a moulded article, a film and / or a fibre.

The examples and figure described below serve to further elucidate the invention, but these merely constitute illustrative examples of particular embodiments, and not a restriction of the scope of the invention.

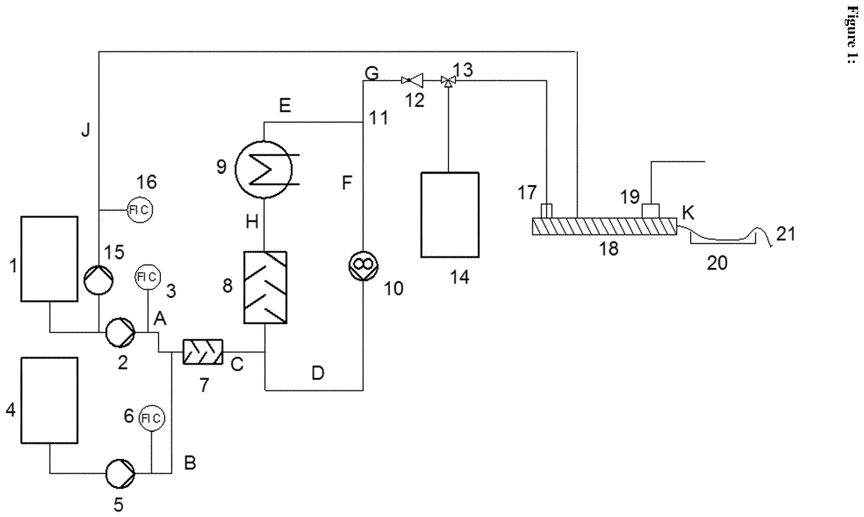

**Figure 1**: Exemplary construction for performance of a two-stage continuous preparation of a thermoplastic polyurethane by reaction sequence in a loop reactor and extruder, as mentioned in the experimental part.

## Examples

All percentages are based on weight, unless stated otherwise.

**Raw materials used:**

Hexamethylene 1,6-diisocyanate (HDI), pentamethylene 1,5-diisocyanate (PDI) and methylene diphenyl isocyanate (MDI) were each sourced from Covestro Deutschland AG, Leverkusen, Germany. The purity of each was ≥ 99% by weight.

Butane-1,4-diol (BDO) was sourced from Ashland, Inc., Covington, Kentucky, USA and Merck KGaA, Darmstadt, Germany. The purity was ≥ 99% by weight.

Hexane-1,6-diol (HDO) was sourced from Merck KGaA, having a purity of ≥ 97% by weight.

PolyTHF 650S Polyether (Poly) was sourced from BASF SE, Ludwigshafen, Germany, having a purity of ≥ 97% by weight.

**Size Exclusion Chromatography (SEC)**

SEC-Method for the Measurement of $\overline{M}_w$:

The weight average molecular weight is determined by size exclusion chromatography (SEC). A sample is dissolved into a solution of 3 g potassium trifluoroacetate in 400 mL hexafluoroisopropanol (concentration of the sample is about 2 mg/mL). The respective SECs are measured with the following components with a flowrate of 1 mL/min:

Pump: HPLC-Pump 515 (Waters GmbH, Germany)

Detector: Smartline RI-Detector 2300 (Knauer Wissenschaftliche Geräte GmbH, Berlin, Germany)

Columns: 1 pre-column, 1000 Å PSS PFG 7μm, 300 Å PSS PFG 7μm, 100 Å PSS PFG 7μm in this order (PSS Polymer Standards Service GmbH, Mainz, Germany)

Degasing: Degaser PSS (PSS Polymer Standards Service GmbH, Mainz, Germany)

Injection volume: 100 microlitres

Temperature: 23 °C - 25 °C

Molecular Weight Standard: Polymethylmethacrylate-Standard-Kit (PSS Polymer Standards Service GmbH, Mainz, Germany)

The weight average molecular weight ($\overline{M}_w$) was determined using the data generated by SEC following the equation:

$$\overline{M}_w = \frac{\sum_i n_i M_i^{2}}{\sum_i n_i M_i} \text{ in g/mol}$$

with:

$M_i$ is the molar mass of the polymers of fraction $i$, with $M_i < M_{i+1}$ for all $i$, in g/mol,

$n_i$ the amount of substance of the polymer of the fraction $i$, in mol.

**Determination of Urethane Group Weight Content**

As shown in Table 1 below, the urethane group weight is measured by first determining the molecular weight of the repeating group: the reaction product of the diisocyanate and the diol. Then, the molecular weight of the urethane groups in each repeating group is determined. Finally, the molecular weight of the urethane groups is divided by the molecular weight of the repeating group to arrive at the urethane group weight, which is expressed as a weight percentage.

Table 1:

| | | Weight in g/mol | number |
|---|---|---|---|
| Diisocyanate | 1,6-hexamethylene diisocyanate | 168.20 | |
| Diol | 1,4-butane diol | 90.12 | |
| | | | |
| Weight of repeating group | | 258.32 | |
| Weight of urethane group | | 59.00 | |
| theoretical number of urethane groups per repeating group | | | 2 |
| Urethane group weight (as wt.% of diisocyanate-diol compound) | | 45.67977702 | |

**Production by Batch Method:**

In a stirred tank (250 mL), an amount of diol was heated to 90 °C for 30 minutes while stirring (170 revolutions per minute (rpm)) and introduced with nitrogen. Subsequently, over a period of 45 minutes, an amount of diisocyanate was metered continuously to the diol. Here, the temperature of the reaction mixture was constantly increased by 4 °C per minute until a temperature of 190 °C was reached after 25 minutes. Once a product temperature of 190 °C was reached, the speed of the stirrer was increased to 300 rpm. The temperature in the stirred tank was kept constant between 190 °C and 200 °C.

After the end of the diisocyanate dosage, the melt was stirred for another 5 minutes. Subsequently, the reaction product was poured in a molten state into an aluminium mould.

**Production by Continuous Method:**

As shown in Fig. 1, from a 250 litre reservoir for hexamethylene 1,6-diisocyanate 1, with the aid of a toothed ring pump 2 (MZR 7255 from HNP, Schwerin, Germany), a hexamethylene 1,6-diisocyanate stream A was conveyed to a static mixer 7. The throughput of the hexamethylene 1,6-diisocyanate stream A was measured by means of a mass flow meter 3 (from Bronkhorst, Ruurlo, The Netherlands, Mini Cori-Flow MIX, max. flow rate 12 kg/h) and adjusted to a value of 2.913 kg/h. From a 250 litre reservoir for butane-1,4-diol 4, with the aid of a toothed ring pump 5 (from HNP, MZR 7205), a butane-1,4-diol stream B was conveyed to the static mixer 7. The throughput of the butane-1,4-diol stream was measured by means of a mass flow meter 6 (from Bronkhorst, Mini Cori-Flow MIX, max. flow rate 8 kg/h) and adjusted to a value of 2.002 kg/h. The temperature of the hexamethylene 1,6-diisocyanate was ambient temperature, about 25 °C. The temperature of the butane-1,4-diol was 40 °C. In the static mixer 7 (Sulzer SMX, diameter 6 mm, ratio of length to diameter L/D = 10, from Sulzer Management Ltd, Winterthur, Switzerland), the hexamethylene 1,6-diisocyanate stream A and the butane-1,4-diol stream B were mixed with one another. This is stream C.

The mixed and dispersed stream C was mixed in a circulation system with a circulating polymer stream D in a static mixer 8 (static mixer equivalent to Sulzer SMX, internal diameter 34 mm, L/D = 20) to give a stream H. The temperature of stream D was 182 °C.

The mixed and already partly reacted stream H was guided into a temperature-controllable static mixer 9. The reaction proceeds there for the most part, and the heat of reaction that arose was removed. The temperature-controllable static mixer 9 was of similar construction to a Sulzer SMX reactor with internal crossed tubes. It had an internal volume of 1.9 litres, a heat exchange area of 0.442 square meter. It was heated/cooled with heat carrier oil. The heating medium temperature at the inlet was 180 °C.

The product stream left the temperature-controllable static mixer 9 as a largely reacted stream E with a temperature of 183 °C. At a branch 11, stream E was split into two substreams F and G. The pressure of substream F was increased at a gear pump 10. Substream F became the abovementioned substream D downstream of the pump.

The gear pump 10 (from Witte Pumps & technology GmbH, Tornesch, Germany, Witte Chem 25,6-3) had a volume per cycle of 25.6 cubic centimetres and a speed of 50 per minute.

The whole circulation system was filled, and the polymer was largely incompressible. Therefore, the mass flow rate of stream G was identical to that of stream C. Stream G consisted of oligomer.

The whole circulation system consisted of jacketed pipelines and apparatuses that were heated with thermal oil. The average heating temperature was 182 °C.

Downstream of the pressure-retaining valve 12, stream G was run past a three-way valve 13. On start-up and shutdown or in the event of faults, it was possible to run said stream G to a waste vessel 14, an open 200 litre metal vat with air extraction. In regular operation, stream G was guided to an extruder 18.

From the hexamethylene 1,6-diisocyanate reservoir 1, with the aid of a micro toothed ring pump 15 (MZR 6355 from HNP), a hexamethylene 1,6-diisocyanate stream J was withdrawn. The throughput of the hexamethylene 1,6-diisocyanate stream J was measured by means of a mass flow meter 16 (from Bronkhorst, Mini Cori-Flow MIX, maximum flow rate 2 kg/h) and adjusted to 0.784 kilogram per hour. The temperature of the hexamethylene 1,6-diisocyanate stream J was likewise room temperature, about 25 °C. This stream was likewise guided to the extruder 18.

The extruder 18 was a ZSK 26 MC from Coperion, Stuttgart, Germany, which was operated at temperatures of 200 °C and a speed of 66 revolutions per minute. In this extruder, stream G, by means of a venting system 17 that was operated at a reduced pressure of about 1 mbar relative to ambient pressure, was freed of any inert gases entrained with streams of matter A and B and of possible volatile reaction products. Downstream of the addition of the oligomer stream G, the hexamethylene 1,6-diisocyanate stream J was added and the reaction to give the polymer was conducted. Before the end of the extruder, the resulting polymer stream was freed of volatile constituents via a degassing operation 19. The pressure in this degassing was 200 mbar below ambient pressure. The polymer stream K was expressed through two nozzles, cooled in a water bath filled with demineralized water, and chopped into pellets by means of a pelletizer 21.

**Extrusion before Measurement of Molecular Weight**

Samples of the material were dried for 8 h at 80 °C in a convection oven before use. To prepare the samples, polymer granules were melted in a "Micro Compounder Model 2005" from DSM Xplore, Xplore Instruments, Geleen, The Netherlands. The processing temperature was between 195 °C and 220 °C at 100 rpm. After a defined residence time in the extruder, a sample was taken and measured by SEC.

Inventive examples 1-3 were prepared using the batch method described above, and are summarized in Table 2:

|  | Ex. 1 | Ex. 2 | Ex. 3 |
|---|---|---|---|
| Diol | BDO | BDO | BDO |
| Amount of diol | 55.38 g | 52.61 g | 52.61 g |
| Diisocyanate | PDI | HDI | HDI |
| Amount of diisocyanate | 94.52 g | 97.36 g | 97.36 g |
| Extrusion temperature | 200 °C | 200 °C | 220 °C |
| $\overline{M}_W$ of reaction product after 0 min | 132600 g/mol | 92680 g/mol | 82520 g/mol |
| $\overline{M}_W$ of reaction product after 1 min | 137300 g/mol | 99010 g/mol | 83830 g/mol |
| $\overline{M}_W$ of reaction product after 2 min | 123600 g/mol | 91470 g/mol | 80230 g/mol |
| Urethane group weight | 48 wt.% | 45 wt.% | 45 wt.% |

As shown in Table 2, each of Examples 1-3 were extruded for, 1 minute in the extruder at the temperatures indicated above. Examples 1-3 each demonstrated a significantly higher molecular weight when the reaction product was left in the extruder for 1 minute, compared to the molecular weight of the reaction product which was not extruded at all. Notably, this effect did not continue, but rather deteriorated significantly when the product was left in the extruder for 2 minutes.

Inventive example 4-5 was prepared using the continuous method described above, and is summarized in Table 3:

|  | Ex. 4 | Ex. 5 |
|---|---|---|
| Diisocyanate | HDI | HDI |
| Diol | BDO | BDO |
| Stream A (HDI) | 2.913 kg/h | 2.913 kg/h |
| Stream B (BDO) | 2.002 kg/h | 2.002 kg/h |
| Stream J (HDI) | 0.784 kg/h | 0.784 kg/h |
| Extrusion temperature | 200 °C | 195 °C |

(continued)

|  | Ex. 4 | Ex. 5 |
|---|---|---|
| $\overline{M}_W$ of reaction product after 0 min | 78970 g/mol | 76330 g/mol |
| $\overline{M}_W$ of reaction product after 1 min | 88960 g/mol | 98080 g/mol |
| $\overline{M}_W$ of reaction product after 2 min | 88380 g/mol | 97410 g/mol |
| Urethane group weight | 45 wt.% | 45 wt.% |

As shown in Table 3, the effect that was observed for Examples 1-3 continued in Example 4 and 5, where the molecular weight of the reaction product after being in the extruder for 1 minute was significantly higher than that of the same product when not extruded.

Comparative examples 6-8 were prepared using the batch method described above, and are summarized in Table 4:

|  | Ex. 6 | Ex. 7 | Ex. 8 |
|---|---|---|---|
| Diol 1 | HDO | HDO | HDO |
| Amount of diol 1 | 62.08 g | 36.43 g | 48.47 g |
| Diol 2 | - | polyTHF 650s | - |
| Amount of diol 2 | - | 49.29 g | - |
| Diisocyanate | HDI | HDI | MDI |
| Amount of diisocyanate | 87.87 g | 64.21 g | 101.53 g |
| Extrusion temperature | 210 °C | 200 °C | 220 °C |
| $\overline{M}_W$ of reaction product after 0 min | 304900 g/mol | 212500 g/mol | 74040 g/mol |
| $\overline{M}_W$ of reaction product after 1 min | 194600 g/mol | 168000 g/mol | 45220 g/mol |
| Urethane group weight | 42 wt.% | 30 wt.% | 30 wt.% |

As shown in Table 4, each of Examples 6-8 exhibited deterioration in the molecular weight when the reaction product rested in the extruder for 1 minute, compared with the same product, which was not extruded. The high heat at which extrusion takes place appeared to have weakened and severed bonds along the polymer chain, resulting in a lower molecular weight when exposed to such temperatures for 1 minute. As shown above, this effect was surprisingly reversed for samples having a urethane group weight greater than 42 %.

## Claims

1. A thermoplastic polyurethane comprising the reaction product of components:

A) one or more diols,
B) one or more diisocyanates, preferably one or more aliphatic, cycloaliphatic, araliphatic diisocyanates and/or mixtures of at least 2 of these,
C) optionally one or more catalysts, and
D) optionally further additives,

wherein the thermoplastic polyurethane has a urethane group weight content of more than 42 wt.% based on the combined weight of the one or more diols and the one or more diisocyanates, and
wherein the weight average molecular weight ($\overline{M}_w$) of the thermoplastic polyurethane increases when heated.

2. A method for injecting a thermoplastic polyurethane into a mould, the method comprising:

- heating an extruder connected to the mould,

- feeding the extruder with a thermoplastic polyurethane comprising the reaction product of components:

A) one or more diols,
B) one or more diisocyanates, preferably one or more aliphatic, cycloaliphatic, araliphatic diisocyanates and/or mixtures of at least 2 of these,
C) optionally one or more catalysts, and
D) optionally further additives,

- heating the thermoplastic polyurethane in the extruder, and
- injecting the heated thermoplastic polyurethane into the mould,

wherein the thermoplastic polyurethane has a urethane group weight content of more than 42 wt.% based on the combined weight of the one or more diols and the one or more diisocyanates, and
wherein the weight average molecular weight ($\overline{M}_w$) of the thermoplastic polyurethane increases after being heated in the extruder.

3. The thermoplastic polyurethane or method of Claims 1 or 2, wherein the one or more diols is selected from the group consisting of ethane-1,2-diol, propane-1,2-diol, propane-1,3-diol, butane-1,2-diol, butane-1,3-diol, butane-1,4-diol, pentane-1,5-diol, hexane-1,6-diol, heptane-1,7-diol, octane-1,8-diol, nonane-1,9-diol, cyclobutane-1,3-diol, cyclopentane-1,3-diol, cyclohexane-1,2-, -1,3- and -1,4-diol, cyclohexane-1,4-dimethanol, and mixtures of at least 2 of these, preferably propane-1,2-diol, propane-1,3-diol, butane-1,2-diol, butane-1,3-diol, butane-1,4-diol, and mixtures of at least 2 of these.

4. The thermoplastic polyurethane or method any of the preceding claims, wherein the one or more diisocyanates is selected from the group consisting of 1,4-diisocyanatobutane (BDI), 1,5-diisocyanatopentane (PDI), 1,6-diisocyanatohexane (HDI), 2-methyl-1,5-diisocyanatopentane, 1,5-diisocyanato-2,2-dimethylpentane, 2,2,4- or 2,4,4-trimethyl-1,6-diisocyanatohexane, 1,8-diisocyanatooctane, 1,10-diisocyanatodecane, 1,3- and 1,4-diisocyanatocyclohexane, 1,4-diisocyanato-3,3,5-trimethylcyclohexane, 1,3-diisocyanato-2-methylcyclohexane, 1,3-diisocyanato-4-methylcyclohexane, 1-isocyanato-3,3,5-trimethyl-5-isocyanatomethylcyclohexane (isophorone diisocyanate; IPDI) and mixtures of at least 2 of these, preferably 1,4-diisocyanatobutane (BDI), 1,5-diisocyanatopentane (PDI), 1,6-diisocyanatohexane (HDI) and mixtures thereof.

5. The thermoplastic polyurethane or method of any of the preceding claims, wherein the one or more diols is selected from the group consisting of butane-1,2-diol, butane-1,3-diol, and butane-1,4-diol, and the one or more diisocyanates is selected from the group consisting of 1,5-diisocyanatopentane (PDI) and 1,6-diisocyanatohexane (HDI).

6. The thermoplastic polyurethane or method of any of the preceding claims, wherein the catalysts are selected from the group consisting of tertiary amines and organic metal compounds, preferably the catalysts are selected from the group consisting of triethylamine, dimethylcyclohexylamine, N-methylmorpholine, N,N'-dimethylpiperazine, 2-(dimethylaminoethoxy)ethanol, diazabicyclo[2,2,2]octane, titanic esters, iron compounds, and/or tin compounds, wherein the tin compound are preferably selected from the group consisting of tin diacetate, tin dioctoate, tin dilaurate, dibutyltin diacetate, dibutyltin dilaurate and/or mixture of at least 2 of these.

7. The thermoplastic polyurethane or method of any of the preceding claims, wherein the further additives are selected from the group consisting of dyes, fillers, processing auxiliaries, plasticizers, nucleating agents, stabilizers, flame retardants, demoulding agents, reinforcing additives, chain extenders or demoulding aids, or mono-, di-, tri- or polyfunctional compounds reactive toward isocyanates, such as methanol, ethanol, n-propanol, isopropanol, n-butanol, isobutanol, sec-butanol, the isomeric pentanols, hexanols, octanols and nonanols, n-decanol, n-dodecanol, n-tetradecanol, n-hexadecanol, n-octadecanol, cyclohexanol, stearyl alcohol, triols such as trimethylolethane, trimethylolpropane or glycerol, higher-functionality alcohols such as ditrimethylolpropane, pentaerythritol, dipentaerythritol or sorbitol, or amines such as butylamine, stearylamine or thiols.

8. The thermoplastic polyurethane or method of any of the preceding claims, wherein the urethane group weight content is between 42 wt.% and 70 wt.%, preferably between 45 wt. % and 58 wt.%, based on the combined weight of the one or more diols and the one or more diisocyanates.

9. The thermoplastic polyurethane or method of any of the preceding claims, wherein the weight average molecular

weight ($\overline{M}_w$) of the thermoplastic polyurethane is greater than 50000 g/mol, preferably between 50000 g/mol and 150000 g/mol, as measured by size exclusion chromatography (SEC) in hexafluoroisopropanol with polymethylmethacrylate as standard.

10. The thermoplastic polyurethane or method of any of the preceding claims, wherein the molecular weight of the thermoplastic polyurethane increases when heated to between 185 and 260 °C, preferably between 190 and 250 °C, most preferably between 190 and 240 °C.

11. The thermoplastic polyurethane or method of any of the preceding claims, wherein the molecular weight of the thermoplastic polyurethane increases when heated for a period of 50 to 60 seconds.

12. The thermoplastic polyurethane or method of any of the preceding claims, wherein the molecular weight of the thermoplastic polyurethane increases when heated for a period of 50 to 60 seconds, and subsequently decreases after being heated for a period of 100 to 120 seconds.

13. The thermoplastic polyurethane or method of any of the preceding claims, wherein the increase of the weight average molecular weight ($\overline{M}_w$) is 1000 g/mol to 25000 g/mol, preferably 1200 g/mol to 25000 g/mol, more preferably 4000 g/mol to 25000 g/mol, as measured by size exclusion chromatography (SEC) in hexafluoroisopropanol with polymethylmethacrylate as standard.

14. The thermoplastic polyurethane or method of any of the preceding claims, wherein the increase of the weight average molecular weight ($\overline{M}_w$) is between 1 % and 45 %, preferably between 1 % and 40 %, more preferably between 1 % and 30 %, even more preferably between 3 % and 30 % , based on the weight average molecular weight of the non-heated polyurethane.

15. The method of any of claims 2-14 wherein the thermoplastic polyurethane is heated at an elevated temperature, preferably form about 195 °C to about 210 °C, for about 50 to 60 seconds in the extruder prior to the injection into the mould.

16. The method of any of claims 2-15 wherein the mould is heated at an elevated temperature, preferably from about 30 °C to about 150 °C, more preferably from 40 °C to 130 °C , most preferred from 40 °C to 80 °C, for about 50 to 60 seconds following the injection of thermoplastic polyurethane.

17. A moulded article, a film and / or a fibre comprising at least one thermoplastic polyurethane according to any one of Claims 1-14, or produced by a method of Claims 2-16.

18. Use of the thermoplastic polyurethane according to any one of Claims 1-14, or produced by a method of Claims 2-16, for the production of a moulded article, a film and / or a fibre.

**Figure 1:**

Europäisches
Patentamt

European
Patent Office

Office européen
des brevets

## EUROPEAN SEARCH REPORT

Application Number

EP 19 21 6829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/124649 A1 (RUKAVINA THOMAS G [US] ET AL) 20 May 2010 (2010-05-20) * example 85; table 5 * * paragraph [0007] * ----- | 1-18 | INV. C08G18/08 C08G18/10 C08G18/32 C08G18/73 |
| X | US 5 352 754 A (RHODES DELMER R [US] ET AL) 4 October 1994 (1994-10-04) * examples 6, 7; table 1 * ----- | 1,3-14, 17,18 | |

**TECHNICAL FIELDS
SEARCHED      (IPC)**

C08G

The present search report has been drawn up for all claims

| Place of search | Date of completion of the search | Examiner |
|---|---|---|
| Munich | 6 July 2020 | Sütterlin, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 21 6829

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2020

| Patent document cited in search report | | | Publication date | Patent family member(s) | | Publication date |
|---|---|---|---|---|---|---|
| US 2010124649 | A1 | | 20-05-2010 | NONE | | |
| US 5352754 | A | | 04-10-1994 | CA | 2107825 A1 | 27-04-1994 |
| | | | | DE | 69315669 T2 | 23-04-1998 |
| | | | | EP | 0595501 A2 | 04-05-1994 |
| | | | | JP | 3012442 B2 | 21-02-2000 |
| | | | | JP | H06192370 A | 12-07-1994 |
| | | | | US | 5352754 A | 04-10-1994 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1331098 A
- GB 1386892 A
- GB 1492242 A
- DE 4133306 A1
- US 6020390 A
- US 20060045996 A1
- US 20120059141 A1
- DE 2901774 A

**Non-patent literature cited in the description**

- Methoden der organischen Chemie" [Methods of Organic Chemistry. **HOUBEN-WEYL.** Makromolekulare Stoffe" [Macromolecular Materials. Georg Thieme Verlag, 1987, vol. E20, 1587-1593
- *Justus Liebigs Annalen der Chemie,* 1949, vol. 562, 75-136
- High Polymers. **J. H. SAUNDERS ; K. C. FRISCH.** Polyurethane, parts 1 and 2. Interscience Publishers, 1962, vol. XVI
- **R. GÄCHTER ; H. MÜLLER.** Taschenbuch für Kunststoff-Additive [Handbook of Plastics Additives. Hanser Verlag Munich, 1990